# FASCICULE DE BREVET EUROPEEN

(11) **EP 0 737 630 B1**
(45) Date de publication et mention de la délivrance du brevet: **21.11.2001**
(21) Numéro de dépôt: 96400729.8
(22) Date de dépôt: 04.04.1996
(51) Int. Cl.: B65G 1/04, B61K 5/02

(54) **Chariot automoteur à fourches télescopiques pour la desserte d'un magasin de stockage de charges sur palettes et magasin de stockage**
Selbstangetriebener Wagen mit teleskopischen Gabeln zur Handhabung von palettierten Lasten in Lagern und Warenlager
Self-propelled vehicle with telescopic forks for handling loaded pallets in warehouses and warehouse

(30) Priorité: 11.04.1995 FR 9504328
(43) Date de publication de la demande: 16.10.1996
(73) Titulaire: GEC ALSTHOM SYSTEMES ET SERVICES SA, 75116 Paris (FR)
(72) Inventeur: Gernez, Alain, 45100 Orleans (FR)
(74) Mandataire: Gosse, Michel

(56) Documents cités:
- FR-A- 2 685 306
- US-A- 3 881 426

## Description

La présente invention concerne un chariot automoteur à fourches télescopiques pour la desserte d'un magasin de stockage de charges sur palettes, le magasin se présentant sous la forme d'une structure à plusieurs niveaux de stockage, chaque niveau comprenant une pluralité de paires de rails parallèles, chaque paire de rails déterminant un couloir pour la circulation d'un dit chariot, lesdites charges sur palettes étant stockées de part et d'autre de chaque couloir sur des supports parallèles aux rails, chaque niveau comportant en outre au moins une paire de rails transversaux perpendiculaires auxdits couloirs et les croisant, déterminant une allée transversale de circulation pour ledit chariot, ladite structure comportant au-moins un dispositif élévateur assurant la mise en place d'un dit chariot au niveau souhaité.

On connaît par le document FRA-2 685 306 un magasin de stockage du type ci-dessus, desservi par des chariots automoteurs bidirectionnels possédant deux jeux de roues orthogonaux appartenant respectivement à deux châssis permutables et permettant au chariot de circuler, soit dans les couloirs, soit dans l'allée transversale.

Un tel magasin desservi par de tels chariots présente l'avantage important d'éviter l'utilisation de machines importantes appelées transtockeurs circulant au sol dans des couloirs entre les rayonnages. Un tel transtockeur possède un moyen élévateur permettant la desserte de tous les niveaux du magasin. Dans un magasin utilisant un transtockeur, il existe en outre, pour la partie mise à disposition des produits, des réseaux de moyens de manutention variés tels que convoyeurs, chariots sur rails, chariots autoguidés. Ces installations présentent l'inconvénient d'obliger à un transfert de charges entre les différents moyens. Ces transferts peuvent déstabiliser les charges.

Un magasin tel que décrit dans le document cité ci-dessus et desservi par de tels chariots automoteurs bidirectionnels permet ainsi d'éviter tous ces moyens avec les transferts de charges qui en résultent.

Cependant la conception de tels chariots bidirectionnels à double châssis permutables comportant chacun un jeu de roues pour assurer la circulation selon deux directions orthogonales est assez complexe. Par ailleurs, de tels chariots ne peuvent desservir des postes extérieurs au magasin que s'ils sont disposés parallèlement aux rayonnages du magasin et non pas perpendiculairement, par exemple frontalement. En effet, les fourches télescopiques liées à l'un des châssis sont toujours dirigées perpendiculairement aux couloirs cités plus haut et ne peuvent donc que servir des postes situés de part et d'autre d'une direction de circulation parallèle à ces couloirs.

Or, il peut être intéressant de servir des postes perpendiculaires auxdits couloirs, c'est-à-dire des postes frontaux par rapport au magasin.

La présente invention a pour but de pallier ces inconvénients et propose un chariot pour la desserte d'un tel magasin, plus simple dans sa conception que le chariot du document antérieur cité, et permettant la desserte de postes extérieurs disposés, soit parallèlement auxdits couloirs, soit parallèlement à ladite allée, soit même dans une direction quelconque.

L'invention a ainsi pour objet un chariot automoteur à fourches télescopiques pour la desserte d'un magasin de stockage de charges sur palettes, comprenant un berceau équipé de roues et de moyens de motorisation d'au-moins quelques unes de ces roues, un châssis monté dans ledit berceau, des moyens de déplacement vertical relatif du berceau par rapport au châssis, ledit châssis étant équipé desdites fourches télescopiques, caractérisé en ce que ledit châssis comporte à son extrémité inférieure une couronne d'orientation à roulement comprenant une partie fixe, liée au châssis et une partie libre en rotation par rapport à ladite partie fixe, ladite couronne d'orientation pouvant supporter une charge axiale, et en ce que des moyens d'entraînement en rotation permettent d'assurer la rotation de l'ensemble du chariot comprenant le berceau et le châssis, par rapport à ladite partie libre en rotation de ladite couronne d'orientation.

L'invention a aussi pour objet un magasin de stockage de charges sur palettes desservi par de tels chariots, et comprenant une structure à plusieurs niveaux de stockage, chaque niveau comprenant une pluralité de paires de rails parallèles, chaque paire de rails déterminant un couloir pour la circulation des chariots, lesdites charges sur palettes étant stockées de part et d'autre de chaque couloir sur des supports parallèles aux rails, chaque niveau comportant en outre, au moins une paire de rails transversaux perpendiculaires auxdits couloirs et les croisant, déterminant une allée transversale de circulation pour les chariots, ladite structure comportant au moins un dispositif élévateur assurant la mise en place des chariots au niveau souhaité, caractérisé en ce qu'à chaque croisement d'un dit couloir avec ladite allée, un moyen d'appui est prévu, situé au niveau des rails de roulement, sur lequel peut venir s'appuyer ladite partie libre en rotation de ladite couronne d'orientation d'un dit chariot par abaissement relatif du châssis du chariot par rapport au berceau, un abaissement relatif supplémentaire du châssis provoquant la levée du berceau, l'ensemble du chariot ne reposant plus alors sur ledit moyen d'appui que par ladite partie libre en rotation de ladite couronne d'orientation, permettant la rotation de l'ensemble du chariot.

On va maintenant donner la description d'un exemple de mise en oeuvre de l'invention en se reportant au dessin annexé dans lequel:

La figure 1 est une vue partielle de dessus d'un niveau de stockage d'un magasin de stockage selon l'invention.

La figure 2 est une vue partielle du magasin, en coupe selon ll-ll de la figure 1 montrant quelques niveaux.

La figure 3 est une vue partielle d'un niveau du magasin, en vue de dessus, agrandi par rapport à la figure 1, sur laquelle a été figuré un chariot à l'emplacement d'un croisement d'un couloir et d'une allée où peut avoir lieu une rotation du chariot. Celui-ci est représenté après rotation et translation en pointillé dans l'allée.

La figure 4 est une vue en perspective montrant le détail d'un rail 2 dans ses deux parties en forme de 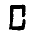 dans les couloirs et en forme de I dans les croisements.

La figure 5 est une vue schématique générale en élévation d'un chariot selon l'invention utilisé pour desservir le magasin de stockage.

La figure 6 montre le chariot en vue de dessus dans un couloir 3, 4 ou 5.

La figure 7 montre le chariot en vue de dessus dans un croisement après pivotement de 90° par rapport à la figure 6.

La figure 8 est une vue du chariot selon la flèche VIII de la figure 7.

La figure 9 montre le chariot en position de roulement, en coupe selon IX-IX de la figure 6, et situé à l'endroit d'un croisement.

La figure 10 montre le chariot au même emplacement mais dans une position où le châssis 23 est abaissé pour venir prendre appui sur des poutres d'appui.

La figure 11 montre l'étape suivante où, continuant à abaisser, relativement, le châssis par rapport au berceau et le châssis ne pouvant plus descendre, le berceau se soulève permettant la rotation de l'ensemble du chariot.

La figure 12 est une vue similaire du chariot, vu dans un couloir, avec le châssis en position haute assurant le soulèvement d'une palette par rapport à son appui sur les rayonnages.

La figure 13 est une vue schématique du châriot équipé de fourches télescopiques pour la préhension de palettes dites à portée périphérique, fourches à déploiement unilatéral.

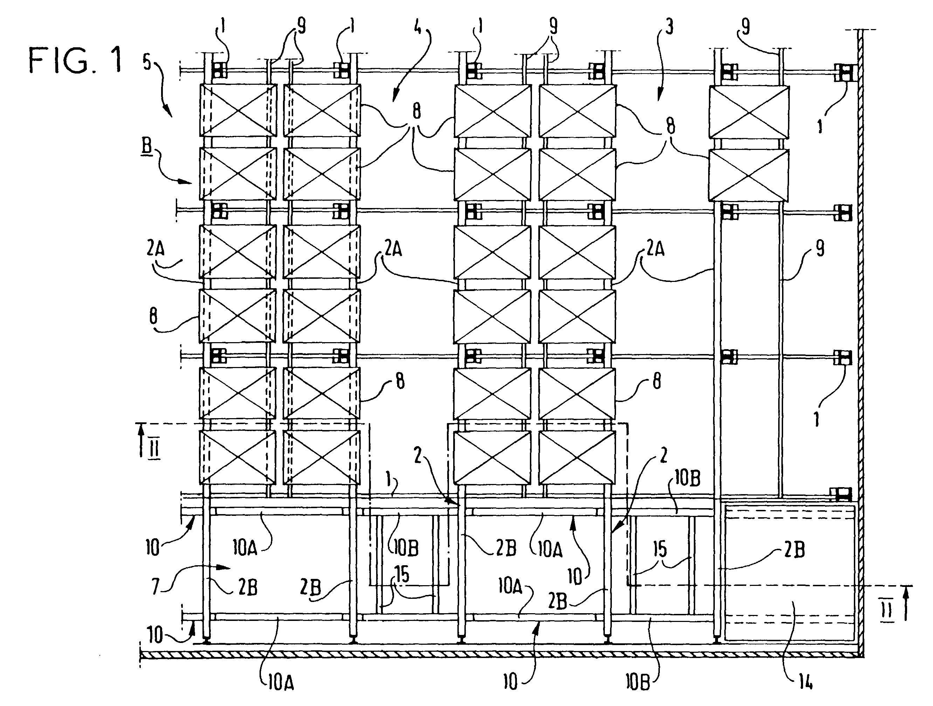

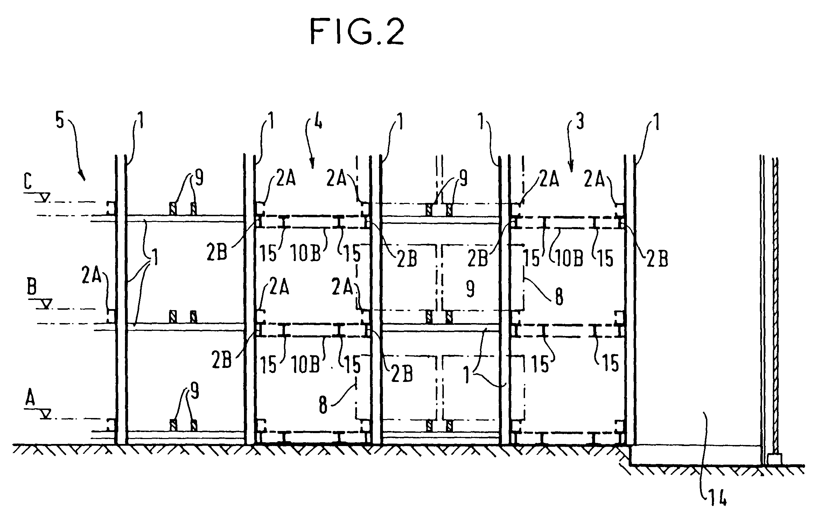

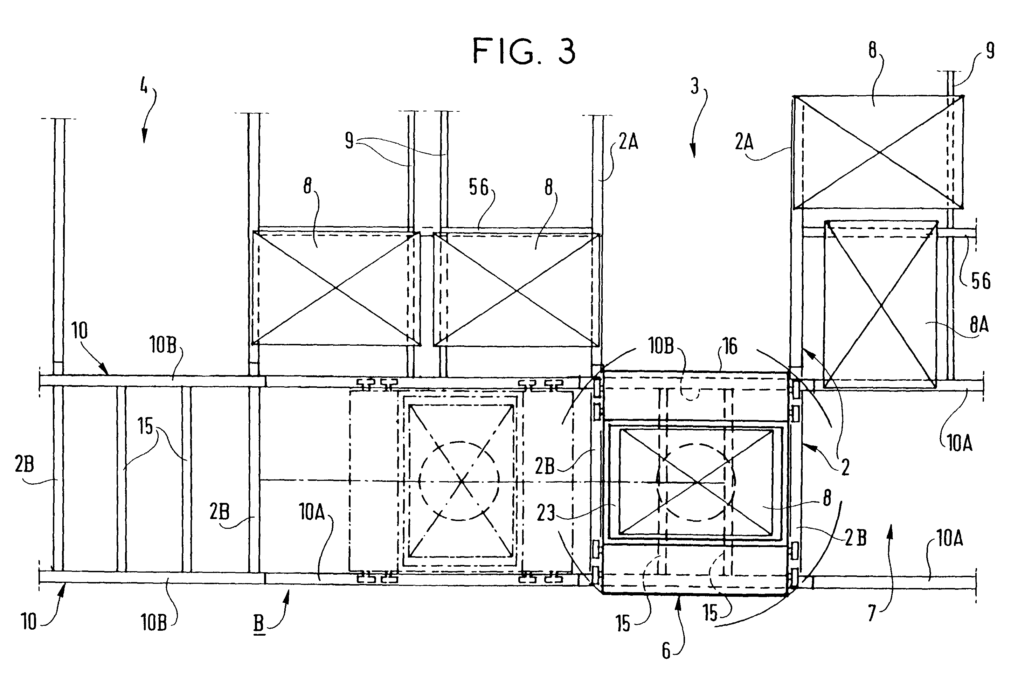

En se référant aux figures 1 à 4, le magasin de stockage comprend une structure 1 à plusieurs niveaux A, B, C, etc...A chaque niveau, la structure porte une pluralité de rails parallèles 2 constitués par des profilés 2A à section en 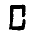 . Chaque paire de rails 2 détermine un couloir (couloirs 3, 4, 5 figures 1 et 2; 3, 4 figure 3) le long duquel peut circuler un chariot 6. Un chariot 6 est schématisé figure 3, qui représente une vue partielle du niveau B, en extrémité du couloir 3. Le même chariot est représenté en traits interrompus, après rotation de 90°, dans une allée perpendiculaire 7.

De part et d'autre de chaque couloir, des charges 8 sur palettes peuvent être stockées en reposant sur des supports parallèles aux rails 2.

Il s'agit en fait de deux supports dont l'un, le support avant, est constitué par la face supérieure 13 des profilés 2A à section en 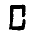 et dont l'autre est une lisse arrière 9.

Ainsi, les profilés 2A servent à la fois de rails de circulation pour des chariots 6 et de support avant pour les charges 8.

Les charges 8 sont mises en place ou extraites de leur emplacement par des chariots 6 équipés de fourches télescopiques à déploiement bilatéral. Un tel chariot est décrit plus loin.

Ainsi qu'il a été dit, une allée 7 est située à une extrémité des couloirs 3, 4, 5 perpendiculairement à ceux-ci et les croisant. Cette allée n'est d'ailleurs pas nécessairement située en extrémité des couloirs. On peut aussi prévoir plusieurs allées, par exemple une à chaque extrémité des couloirs.

Cette allée 7 permet à des chariots 6 de desservir les étagères des différents couloirs 3, 4, 5. Dans cette allée 7, les chariots circulent le long de rails 10. En dehors des zones de croisement avec les couloirs, ces rails 10 sont constitués par des profilés 10A à section en 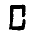 . En revanche, dans les zones de croisement, les rails 10 sont constitués par des profilés 10B à section en I. De même, dans les zones de croisements, les rails 2 des couloirs sont constitués par des profilés 2B à section en I.

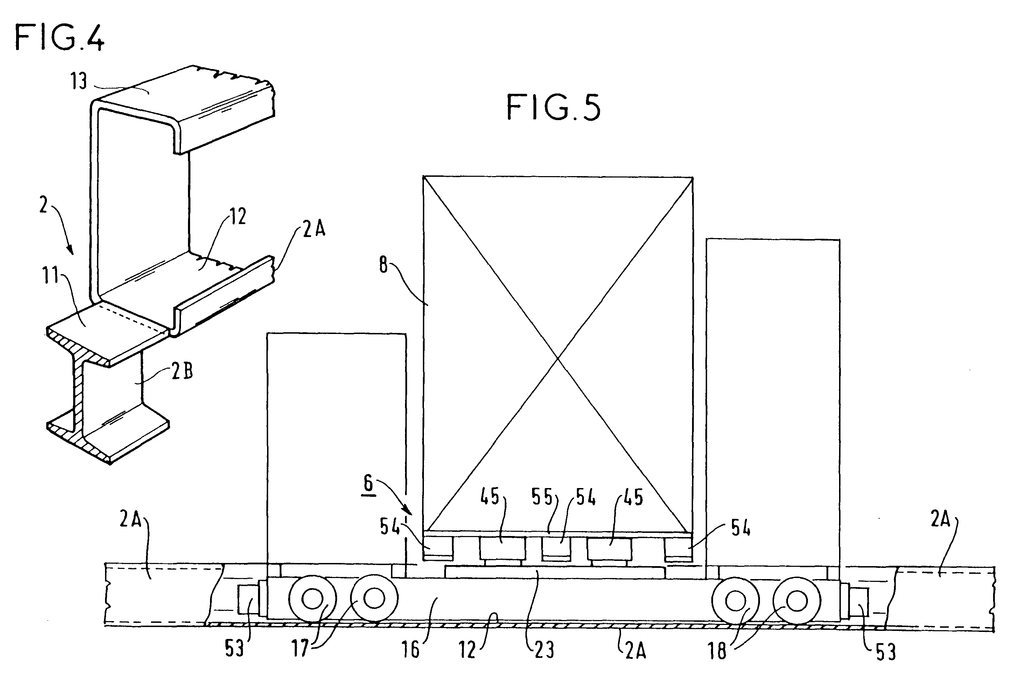

La figure 4 montre le détail d'un rail 2 avec le profilé 2A dans les couloirs et le profilé 2B dans les zones de croisement avec l'allée 7.

Comme on le voit, la face supérieure 11 du profilé 2B, qui constitue la surface de roulement d'un chariot 6 est située dans le prolongement de la surface de roulement 12 du profilé 2A. Comme on l'a dit plus haut, la face supérieure 13 des profilés 2A sert de support avant pour les charges 8.

Le magasin comporte un dispositif élévateur 14 permettant d'acheminer les chariots au niveau désiré.

Enfin, à chaque croisement d'un couloir avec l'allée 7, est prévu un moyen d'appui constitué par deux poutres 15 dont la face supérieure est au niveau des surfaces de roulement des rails 2 et 10.

Comme on le verra plus loin, ces appuis sont utilisés pour effectuer la rotation des chariots 6 pour permettre leur passage d'un couloir vers l'allée 7 ou vice-versa.

En référence aux figures 5 à 12, on va maintenant décrire un chariot 6.

Celui-ci comprend un berceau 16 équipé de roues 17, 18. Les roues 18 sont motrices et entraînées par un moto-réducteur 19 à l'aide d'organes de transmission 20, 21, 22. Les roues 17 sont seulement porteuses. Dans ce berceau 16 est monté un châssis 23. Ce châssis 23 est monté dans le berceau 16 par le moyen de quatre cames 24, 25, 26 et 27, constituant chacune un excentrique comprenant un disque 28 et un doigt excentré 29, le doigt 29 de chaque came pénétrant dans un évidement 30 pratiqué, d'une part dans une traverse 32, et d'autre part dans des supports 31, 31A liés au berceau 16. Les cames 24 et 25 sont reliées l'une à l'autre par un arbre 33 lié au châssis 23 et les cames 26 et 27 sont reliées l'une à l'autre par un arbre 34 lié au châssis 23. Les deux arbres 33 et 34 sont reliés par deux chaînes 35 et 36 passant sur des pignons 37 et 38 des arbres 33 et 34 et des pignons 39 et 40 d'un arbre 41.

L'arbre 41 est entraîné en rotation par un moto-réducteur 42 lié au châssis 23. La rotation des arbres 33 et 34 et donc des cames 24 à 27 provoque le déplacement vertical relatif du berceau 16 par rapport au châssis 23. Pour éviter le déplacement latéral du châssis 23 par rapport au berceau 16 lors des déplacements verticaux relatifs, les arbres 33 et 34 passent dans une lumière de guidage 43, pratiquée dans des pattes 44 liées au berceau 16.

Sur le châssis 23 sont montées des fourches télescopiques 45, classiques, à déploiement bilatéral. Un moto-réducteur 46 assure le mouvement de ces fourches.

Pour amortir les chocs éventuels en bout de couloirs, le berceau 16 porte à ses extrémités des tampons 53.

Enfin, le châssis 23 porte, à son extrémité inférieure, une couronne d'orientation à roulement 47 comprenant une partie fixe 48 liée au châssis et une partie 49 libre en rotation par rapport à la partie fixe 48 . Cette couronne d'orientation 47 est calculée de façon à pouvoir supporter une charge axiale. Un moto-réducteur 50 est lié au châssis 23 et il entraîne une chaîne 51 qui entoure la partie libre 49 de la couronne d'orientation 47. La chaîne 51 comporte un point 52 lié à la partie libre 49.

Le fonctionnement du chariot 6 est le suivant:

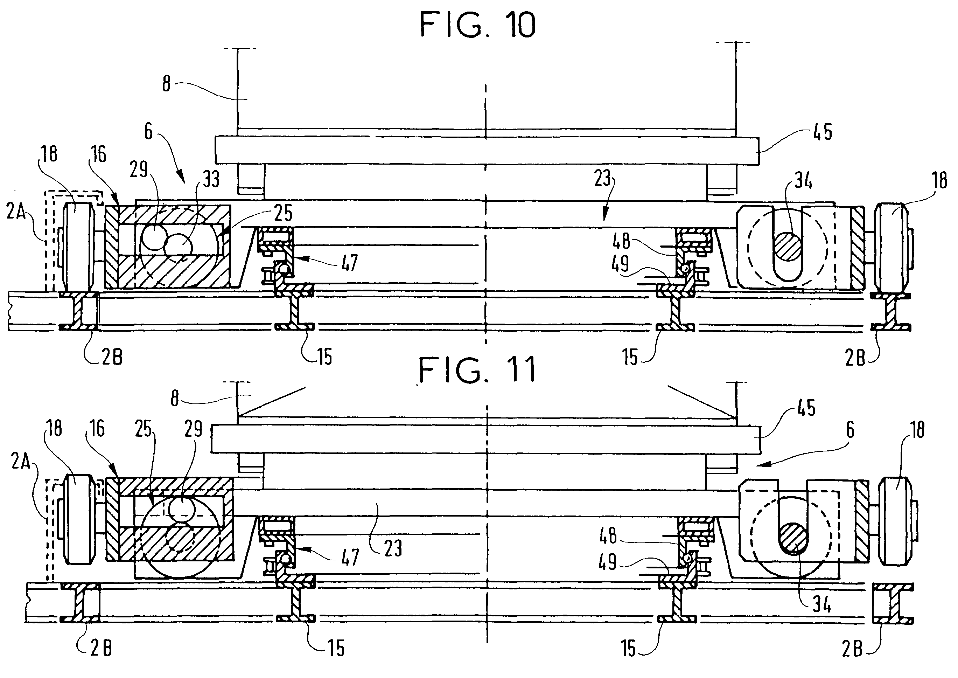

Lorsque le chariot 6 roule dans un couloir 3, 4, 5 ou dans l'allée 7, la position relative du châssis 23 par rapport au berceau 16, est celle représentée figure 9.

Dans cette position, si les fourches 45 sont déployées, à droite ou à gauche d'un couloir, elles passent librement entre la surface d'appui 13 des rails 2A (figure 4) sur laquelle repose les longerons 54 (figure 5) des palettes, et le plancher 55 d'une palette.

Pour soulever la palette avec sa charge, il suffit de mettre en marche le moto-réducteur 42 de façon à entraîner en rotation les arbres 33 et 34 dans le sens inverse des aiguilles d'une montre (vue à partir de la figure 9), ce qui provoque le soulèvement des arbres 33 et 34 par appui des doigts 29 contre la partie inférieure de l'évidement 30.

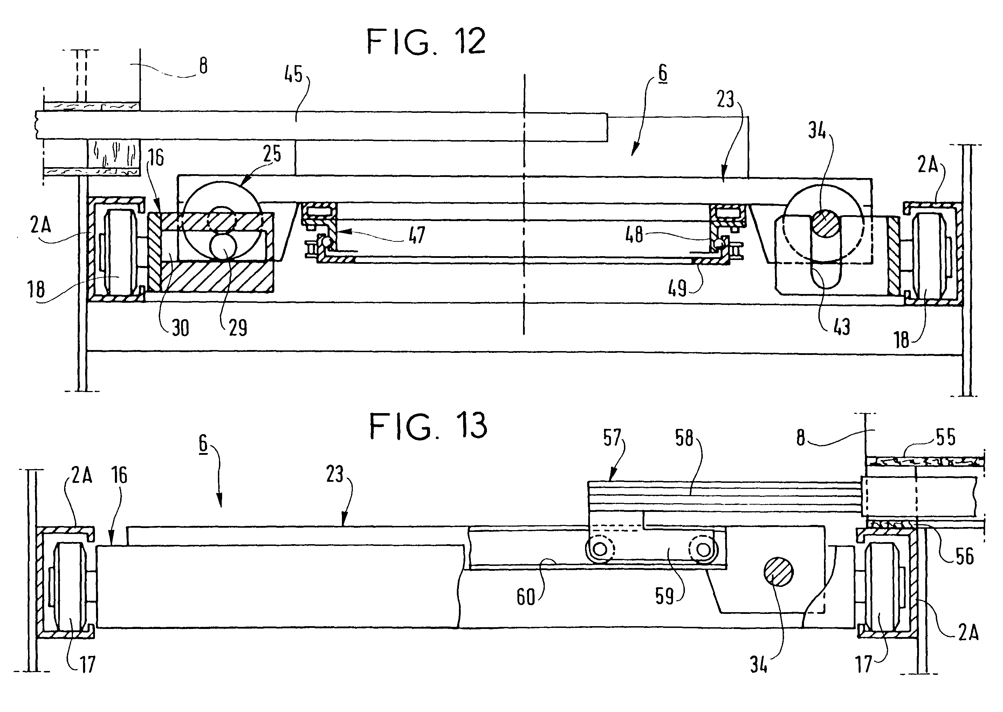

On se retrouve alors dans la position de la figure 12.

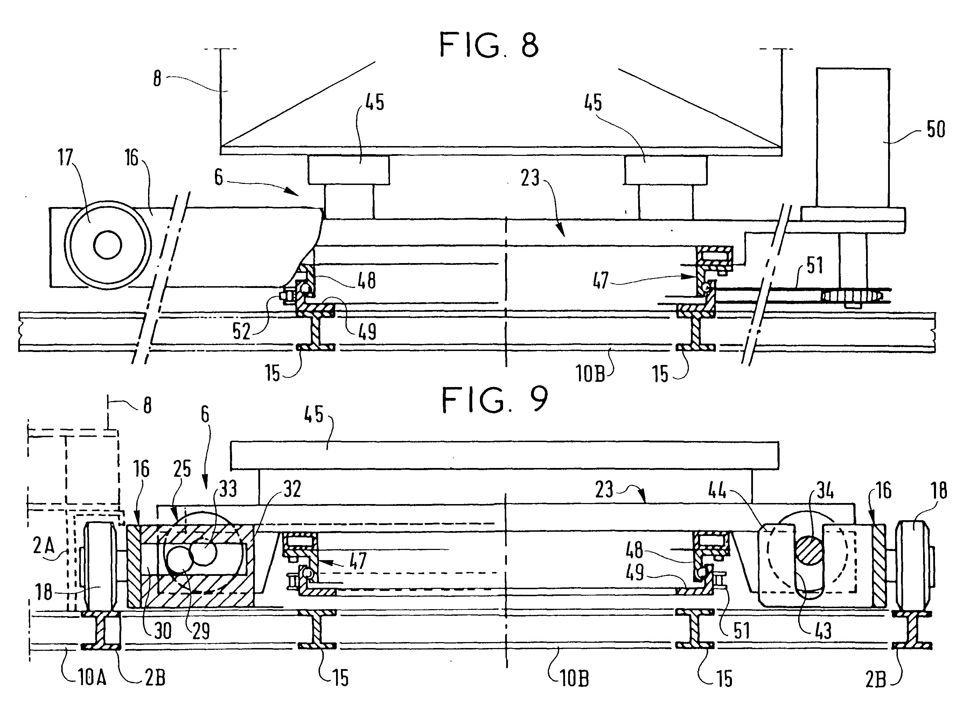

Pour effectuer le passage d'un couloir 3, 4, 5 vers l'allée ou vice-versa, on se place d'abord à un croisement, au-dessus des poutres d'appui 15 puis, à partir de la position de la figure 9, on met en route le moto-réducteur 42 en sens inverse de précédemment, ce qui provoque l'abaissement des arbres 33 et 34 (et avec eux du châssis 23) jusqu'à ce que la partie 49 de la couronne d'orientation 47 vienne s'appuyer sur les poutres d'appui 15, on se trouve alors dans la position de la figure 10, puis, la rotation des cames 24 à 27 se poursuivant, et le châssis 23 ne pouvant plus descendre, c'est le berceau 16 qui se soulève et on est dans la position de la figure 11 où les roues ne touchent plus les rails, le chariot repose entièrement sur les poutres d'appui 15 par la couronne d'orientation 47. En mettant en route le moto-réducteur 50 (voir figure 8) on peut effectuer la rotation, de l'angle souhaité, de la totalité du chariot 6 qui pivote sur la partie 49 de la couronne d'orientation 47. Pour passer d'un couloir à l'allée 7, la rotation est de 90° mais on peut pivoter de la quantité souhaitée ce qui peut permettre, en dehors du magasin par exemple, de tracer des itinéraires de circulation orientés d'une façon quelconque par rapport aux couloirs du magasin et ainsi alimenter des postes de travail dans des directions quelconques.

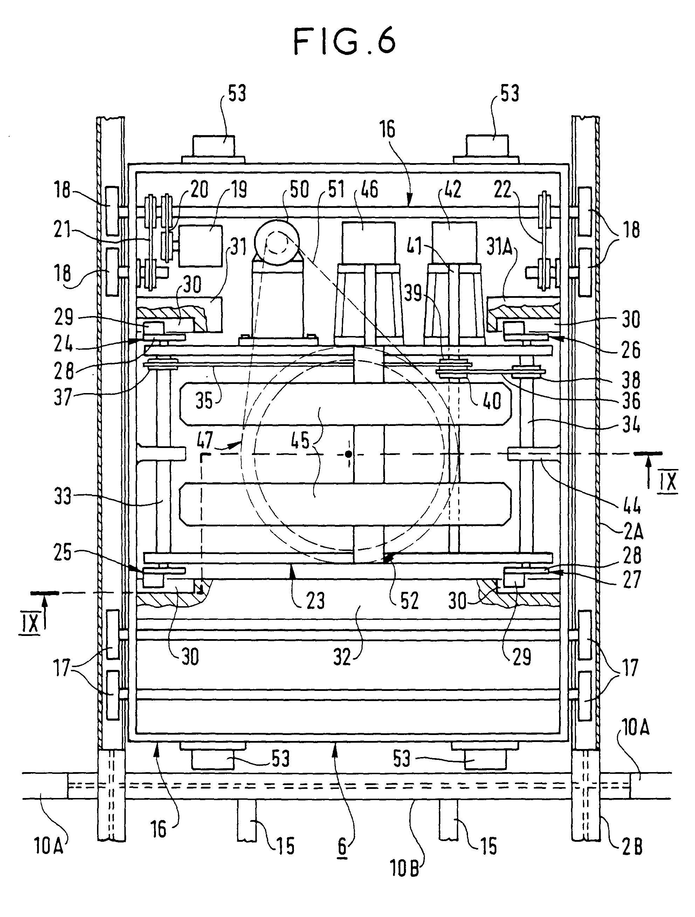

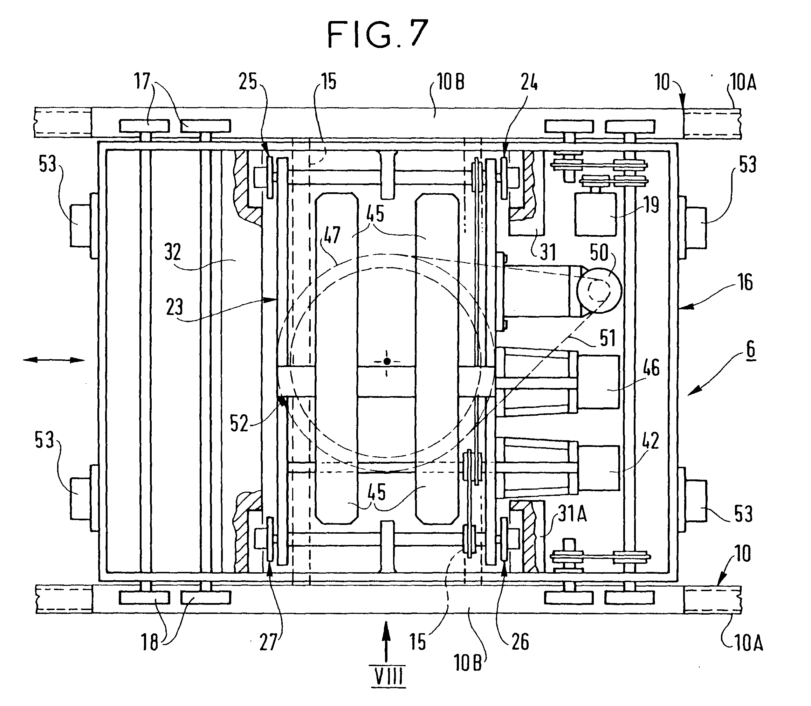

La figure 7 montre le chariot 6 ayant pivoté de 90° par rapport à la position de la figure 6, prêt à circuler dans l'allée 7 sur les rails 10.

On comprend ainsi que, grâce à un tel chariot pivotant, on peut, en-dehors du magasin alimenter des postes de travail situés frontalement c'est-à-dire parallèlement à l'allée 7 aussi bien que parallèlement aux couloirs, comme à l'intérieur du magasin.

Cette caractéristique permet également de préparer des commandes en disposant des palettes, comme celle 8A figure 3, frontalement, c'est-à-dire à partir du chariot positionné pour circuler dans l'allée 7. Pour permettre une dépose des palettes dans cette position le long de l'allée 7, on prévoit une lisse support 56 parallèlement à l'allée 7.

La figure 13 montre le cas d'un chariot dont le châssis 23 est équipé de fourches téléscopiques 57 dont le premier élément 58 est lié en porte à faux sur un coulisseau 59 coopérant avec des glissières 60 liées au châssis 23.

Ces fourches sont employées lorsque les palettes utilisées sont des palettes dites à portée périphérique, c'est-à-dire des palettes où les longerons 54 situés sous le plancher 55 sont reliés par une planche 56 (par opposition aux palettes dites "européennes" où rien ne relie les longerons à leur extrémité inférieure). Ces palettes sont disposées directement sur la face supérieure 13 des profilés 2A. L'utilisation de fourches télescopiques 45 du type précédent est impossible dans ce cas, à moins de disposer des rehausses entre la face 13 et le plancher inférieur 56 de la palette, rehausses qui prennent de la place en hauteur et coûtent cher enr éalisation.

Ces fourches sont à déploiement unilatéral cependant, pour servir les deux côtés du couloir, il suffit de retourner le chariot 6 dans un croisement avec l'allée 7.

## Revendications

1. Chariot automoteur (6) à fourches télescopiques (45) pour la desserte d'un magasin de stockage de charges (8) sur palettes (54, 55), comprenant un berceau (16) équipé de roues (17, 18) et de moyens de motorisation (19) d'au-moins quelques unes de ces roues, un châssis (23) monté dans ledit berceau (16), des moyens (24 à 27) de déplacement vertical relatif du berceau (16) par rapport au châssis (23), ledit châssis étant équipé desdites fourches télescopiques (45), **caracterisé en ce que** ledit châssis (23) comporte à son extrémité inférieure une couronne d'orientation à roulement (47) comprenant une partie fixe (48) liée au châssis et une partie libre en rotation (49) par rapport à ladite partie fixe, ladite couronne d'orientation pouvant supporter une charge axiale et **en ce que** des moyens (50, 51) d'entraînement en rotation permettent d'assurer la rotation de l'ensemble du chariot (6) comprenant le berceau (16) et le châssis (23), par rapport à ladite partie libre en rotation (49) de ladite couronne d'orientation (47).

2. Magasin de stockage de charges (8) sur palettes (54, 55) desservi par des chariots (6) selon la revendication 1, comprenant une structure à plusieurs niveaux de stockage, chaque niveau comprenant une pluralité de paires de rails parallèles (2), chaque paire de rails déterminant un couloir (3, 4,5) pour la circulation des chariots, lesdites charges (8) sur palettes étant stockées de part et d'autre de chaque couloir sur des supports (2A, 9) parallèles aux rails, chaque niveau comportant en outre, au moins une paire de rails transversaux (10) perpendiculaires auxdits couloirs et les croisant, déterminant une allée transversale de circulation (7) pour les chariots, ladite structure comportant au-moins un dispositif élévateur (14) assurant la mise en place des chariots (6) au niveau souhaité, **caractérisé en ce qu'**à chaque croisement d'un dit couloir (3, 4, 5) avec ladite allée, un moyen d'appui (15) est prévu, situé au niveau des rails de roulement, sur lequel peut venir s'appuyer ladite partie libre en rotation (49) de ladite couronne d'orientation (47) d'un dit chariot (6) par abaissement relatif du châssis (23) du chariot (6) par rapport au berceau (16), un abaissement relatif supplémentaire du châssis provoquant la levée du berceau (16), l'ensemble du chariot (6) ne reposant plus alors sur ledit moyen d'appui (15) que par ladite partie libre en rotation (49) de ladite couronne d'orientation (47), permettant la rotation de l'ensemble du chariot (6).

3. Magasin de stockage selon la revendication 2, **caractérisé en ce que** les rails (2) desdits couloirs (3, 4, 5) et de ladite allée (7), à l'exception des croisements, sont constitués par des profilés (2A, 10A) à section en 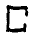 les roues du chariot roulant dans le profilé alors que sa surface supérieure (13) constitue un desdits supports pour les palettes, et **en ce que**, dans les croisements, les rails sont constitués par des profilés (2B, 10B) dont la surface de roulement (11) constitue la surface supérieure du profilé, située dans le prolongement de la surface de roulement (12) des profilés (2A) à section en 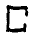 .

## Patentansprüche

1. Selbstangetriebener Wagen (6) mit teleskopischen Gabeln (45) zur Bedienung eines Lagermagazines für Lasten (8) auf Paletten (54, 55), mit einem mit Rädern (17, 18) ausgestatteten Rahmen (16) und Antriebsmitteln (19) für wenigstens einige dieser Räder, einem in dem Rahmen (16) montierten Gestell (23), Mitteln (24 bis 27) zur relativen Vertikalbewegung des Rahmens (16) in Bezug auf das Gestell (23), wobei das Gestell mit den teleskopischen Gabeln (45) ausgestattet ist, **dadurch gekennzeichnet, dass** das Gestell (23) an seinem unteren Ende einen gelagerten Orientierungskranz (47) mit einem mit dem Gestell verbundenen festen Bereich (48) und einem in Bezug auf den festen Bereich frei drehbaren Bereich (49) aufweist, wobei der Orientierungskranz eine axiale Last tragen kann, und dass Drehantriebsmittel (50, 51) es ermöglichen, die Drehung der Gesamtheit des Wagens (6) mit dem Rahmen (16) und dem Gestell (23) in Bezug auf den frei drehbaren Bereich (49) des Orientierungskranzes (47) zu gewährleisten.

2. Magazin zur Speicherung von Lasten (8) auf Paletten (54, 55) das von Wägen (6) nach Anspruch 1 bedient ist, mit einer Struktur mit mehreren Lagerungsniveaus, wobei jedes Niveau eine Mehrzahl von parallelen Schienenpaaren (2) umfasst, jedes Schienenpaar einen Gang (3, 4, 5) für den Umlauf der Wägen festlegt, die Lasten (8) auf Paletten beiderseits jedes Gangs auf zu den Schienen parallelen Trägern (2A, 9) gelagert sind, jedes Niveau ferner wenigstens ein Paar von zu den Gängen transversalen und diese kreuzenden Schienen (10) umfasst, die einen Laufweg (7) für die Wägen festlegen, wobei die Struktur ferner eine Hebevorrichtung (14) umfasst, die die Plazierung der Wägen (6) auf dem gewünschten Niveau gewährleistet, **dadurch gekennzeichnet, dass** an jeder Kreuzung eines Gangs (3, 4, 5) mit dem Laufweg ein Auflagermittel (15) vorgesehen ist, das auf dem Niveau der Rollschienen angeordnet ist und auf dem sich der frei drehbare Bereich (49) des Orientierungskranzes (7) eines Wagens (6) durch relative Absenkung des Gestells (23) des Wagens (6) in Bezug auf den Rahmen (16) abstützen kann, wobei eine relative zusätzliche Absenkung des Gestells die Anhebung des Rahmens (16) bewirkt, wobei die Gesamtheit des Wagens (6) dann nur noch auf dem Auflagermittel (15) mit dem frei drehbaren Bereich (49) des Orientierungskranzes (47) ruht, was die Drehung des gesamten Wagens (6) ermöglicht.

3. Lagermagazin nach Anspruch 2, **dadurch gekennzeichnet, dass** die Schienen (2) der Gänge (3, 4, 5) und des Weges (7) mit Ausnahme der Kreuzungen durch Profile (2A, 10A) mit 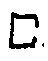 -förmigem Querschnitt gebildet sind, wobei die Räder des Wagens in dem Profil rollen, während dessen obere Oberfläche (13) einen der Träger für die Paletten bildet, und dass in den Kreuzungen die Schienen durch Profile (2B, 10B) gebildet sind, deren Rollfläche (11) die obere Oberfläche des Profils bildet, dass sich in Verlängerung der Rolloberfläche (12) der 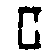 -förmigen Profile (2A) befindet.

## Claims

1. A self-propelled carriage (6) having telescopic forks (45) for serving a store for storing loads (8) on pallets (54, 55), the carriage comprising a cradle (16) equipped with wheels (17, 18) and with drive means (19) for driving at least some of the wheels, a frame (23) mounted in said cradle (16), and means (24 to 27) for moving the cradle (16) vertically relative to the frame (23), said frame being equipped with said telescope forks (45), said carriage being **characterized in that** the bottom end of said frame (23) is provided with a turntable ring (47) mounted on ball bearings, which ring comprises a fixed portion (48) secured to the frame and a freely-rotatable portion (49) that is free to rotate relative to said fixed portion, said turntable ring being capable of supporting an axial load, and **in that** turning means (50, 51) make it possible to turn the carriage (6) as a whole, comprising the cradle (16) and the frame (23), relative to said freely-rotatable portion (49) of said turntable ring (47).

2. A store for storing loads (8) on pallets (54, 55), which store is served by carriages (6) according to claim 1, said store comprising a structure having a plurality of storage levels, each level comprising a plurality of parallel pairs of rails (2), each pair of rails determining an aisle (3, 4, 5) along which the carriages can travel, said loads (8) on pallets being stored on either side of each aisle on supports (2A, 9) parallel to the rails, each level further comprising at least one pair of transverse rails (10) perpendicular to said aisle and crossing them, determining a transverse gangway (7) along which the carriages can travel, said structure further comprising at least one lift device (14) for placing the carriages (6) at the desired level, said store being **characterized in that**, at each crossing where said gangway crosses a said aisle (3, 4, 5), rest means (15) are provided, situated flush with the rails on which the carriage runs, and enabling said freely-rotatable portion (49) of said turntable ring (47) of a said carriage (6) to be rested on them by lowering the frame (23) of the carriage (6) relative to the cradle (16), additional relative lowering of the frame causing the cradle (16) to rise, the carriage (6) as a whole then resting on said rest means (15) via said freely-rotatable portion (49) of said turntable ring (47) only, thereby enabling the carriage (6) as a whole to be turned.

3. A store according to claim 2, **characterized in that**, except at the crossings, the rails (2) of said aisles (3, 4, 5) and of said gangway (7), are constituted by 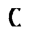 -section members (2A, 10A), the wheels of the carriage running in the section member, while the top surface (13) of the section member constitutes one of said supports for the pallets, and **in that**, in the crossings, the rails are constituted by section members (2B, 10B) whose running surfaces (11) constitute the top surfaces of the section members, which top surfaces are situated in alignment with the running surfaces (12) of the 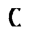 -section members (2A).
